# EUROPEAN PATENT SPECIFICATION

(11) **EP 3 659 832 B1**
(45) Date of publication and mention of the grant of the patent: **25.05.2022**
(21) Application number: 19211839.6
(22) Date of filing: 27.11.2019
(51) Int. Cl.: B60C 25/138, B60C 25/05

(54) **TYRE CHANGING APPARATUS**
REIFENWECHSELGERÄT
APPAREIL DE CHANGEMENT DE PNEUMATIQUES

(30) Priority: 30.11.2018 IT 201800010722
(43) Date of publication of application: 03.06.2020
(73) Proprietor: NEXION S.p.A., 42015 Correggio (RE) (IT)
(72) Inventor: CORGHI, Giulio, 42015 Correggio(Reggio Emilia) (IT)
(74) Representative: Conti, Marco

(56) References cited:
- EP-A1- 2 962 876
- CN-U- 201 970 804
- US-B1- 8 783 326
- US-B1- 8 985 178

## Description

This invention relates to a tyre changing apparatus. Tyre changing apparatuses are machines used to move (mount and demount) a vehicle wheel tyre relative to a respective wheel rim. A tyre changing apparatus comprises a frame, which generally includes a column that extends vertically and a base that rests on the floor. On the base, the apparatus comprises a clamping chuck, configured to lock the wheel rim and set it in rotation during mounting and demounting operations.

A tyre changing apparatus comprises a working unit which includes two working tools and which is preferably used to act in conjunction with mounting tools in operations for mounting the tyre on the rim.

During these operations, the working unit must be placed in contact with the tyre and so must be vertically aligned with and above the wheel. For this purpose, the tyre changer is equipped with an articulated arm which is connected to the frame column to support the working unit during operations, in particular mounting operations.

The working unit must be moved vertically relative to the wheel, closer during operations and further away when the wheel or rim is released from the clamping chuck.

In prior art tyre changers, several solutions for moving the working unit are known. One of these solutions, for example, is described in document EP2995478B1, where an actuator is interposed between the column of the frame and the articulated arm in such a way that the articulated arm can be moved relative to the column so that the working unit can also be moved relative to the wheel. Other examples of tyre changers provided with tools for pressing the side of a tyre are disclosed in patent documents CN201970804U and US8985178B1.

However, since it involves moving the entire assembly consisting of the articulated arm and the working unit, this solution requires muscular strength which may, in some cases, be quite considerable. Moreover, its positioning precision is relatively limited.

The aim of this invention is to provide a tyre changing apparatus that overcomes the above mentioned disadvantages of the prior art.

This aim is fully achieved by the tyre changing apparatus and method of this invention as characterized in the appended claims.

According to one aspect of it, this invention provides a tyre changing apparatus (or wheel service apparatus). The tyre changing apparatus is configured to mount/demount a tyre on/from a respective vehicle wheel rim. In an embodiment, the apparatus is a machine for mounting a tyre on a respective vehicle wheel rim.

In an embodiment, the apparatus comprises at least one operating tool. The operating tool is configured to demount and/or mount the tyre from/on the respective wheel rim. In an embodiment, the operating tool is a mounting tool. In an embodiment, the operating tool is a demounting tool.

The apparatus comprises a frame. The frame may include a base. The frame may include a column, extending in a vertical direction.

The apparatus includes a chuck for clamping the rim. In an embodiment, the clamping chuck is associated with the base. In one embodiment, the chuck for clamping the rim is rotatable about an axis of rotation which is preferably parallel to the vertical direction. In other embodiments, the axis of rotation might be horizontal or inclined.

The apparatus comprises a working unit. The working unit comprises a first working tool. The working unit comprises a second working tool. In an embodiment, the apparatus comprises an articulated arm. The articulated arm extends from a first end to a second end. In an embodiment, the first end of the articulated arm is connected to the column of the frame. In an embodiment, the second end of the articulated arm is connected to the working unit. The articulated arm includes two or more segments, pivotally connected at one or more hinges.

In an embodiment, the articulated arm is hinged to the column of the frame at a connecting position. Hence, an additional hinge is provided, for rotating the articulated arm to with respect to the column, further to the hinges which permit the relative rotation of the segments which form the articulated arm. This arrangement allows the articulated arm (having a first and a second end) to be connected to the column at the first end, the second end of the articulated arm being rotatable around an axis which is parallel to the column but offset therefrom.

According to one aspect of this invention, the connecting position is fixed along the vertical direction.

In an embodiment, the apparatus comprises an actuator. The actuator is configured to vary the distance between the working unit and the clamping chuck. In an embodiment, the actuator is connected to the second end of the articulated arm.

In an embodiment, the working unit comprises a supporting rod. For example, the working unit comprises a single supporting rod. Preferably, the actuator is interposed between the second end of the articulated arm and the supporting rod. Both the first working tool and the second working tool are connected to the (same) supporting rod.

In an embodiment, the supporting rod is oriented perpendicularly to the vertical direction. In an embodiment, the supporting rod is oriented along a direction perpendicular to the axis of rotation of the clamping chuck. In an embodiment, the first tool is connected to the supporting rod. In an embodiment, the first tool is connected to a first end of the supporting rod. In an embodiment, the second tool is connected to the supporting rod. In an embodiment, the second tool is connected to a second end of the supporting rod. In an embodiment, the first and the second tool are spaced from each other.

In an embodiment, the actuator is interposed between the second end of the articulated arm and the supporting rod. In an embodiment, the actuator is interposed between the second end of the articulated arm and the working unit. In an embodiment, the actuator is configured to vary the distance between the working unit and the second end of the articulated arm along a direction parallel to the axis of rotation of the wheel. In an embodiment, the actuator is configured to vary the distance between the working unit and the second end of the articulated arm along the vertical direction.

In an embodiment, the articulated arm is hinged to the column of the frame at a connecting position. According to one aspect of this invention, the connecting position is fixed along the vertical direction.

In an embodiment, the working unit comprises a spacing bar. The spacing bar is parallel to the vertical direction. The spacing bar extends from a first end to a second end. The first end of the spacing bar is connected to the actuator. The second end of the spacing bar is connected to the supporting rod at a connecting position. In an embodiment, the connecting position is intermediate between the first end and the second end of the supporting rod.

In an embodiment, the spacing bar is hinged to the articulated arm to rotate about a first adjustment axis. In an embodiment, the spacing bar is hinged to the supporting rod at the connecting position to allow the spacing bar and the supporting rod to rotate relative to each other (about the first adjustment axis). Preferably, the first adjustment axis is parallel to the axis of rotation of the clamping chuck. In an embodiment, the first adjustment axis is parallel or perpendicular to the vertical direction. The first adjustment axis passes through the connecting position.

In an embodiment, the actuator includes a cylinder. The cylinder is connected to the articulated arm. In an embodiment, the actuator comprises a piston. The piston is slidable inside the cylinder. The piston is slidable inside the cylinder along the vertical direction. In an embodiment, the piston is connected to the supporting rod of the working unit at a connecting position.

In an embodiment, the piston is configured to rotate about the first adjustment axis. This allows adjusting an angular position of the supporting rod in a horizontal plane perpendicular to the vertical direction. In an embodiment, the piston is hinged to the supporting rod. In this embodiment, the supporting rod rotates relative to the piston. According to one aspect of the invention, the supporting rod is configured to rotate relative to the piston about the first adjustment axis.

In an embodiment, the connecting position is fixed along the supporting rod.

In an embodiment, the connecting position is variable along the supporting rod between the first end and the second end of the supporting rod.

This feature provides greater flexibility, allowing the machine to be adapted to a plurality of configurations.

In an embodiment, the apparatus comprises a control unit. The control unit is configured to drive the actuator. In an embodiment, the control unit is positioned on the working unit. In an embodiment, the control unit is positioned on the second end of the articulated arm.

This positioning arrangement for the control unit allows the working unit to be easily driven during operations without having to move away from the articulated arm. As a result, the working unit can be positioned from a closer distance and thus more precisely.

In an embodiment, the apparatus comprises a manoeuvring element. In an embodiment, the manoeuvring element is located on the control unit. The manoeuvring element is configured to make it easier to move the articulated arm manually and to facilitate positioning of the working unit.

In an embodiment, the articulated arm comprises a plurality of segments. The articulated arm comprises a first segment. The first segment is hinged to the column of the frame. The articulated arm comprises a second segment. The second segment is connected to the first segment. The second segment is movable relative to the first segment to vary the distance of the second end of the articulated arm from the column of the frame. In an embodiment, the first segment is hinged to the second segment to rotate relative to it about a second adjustment axis parallel to the vertical direction.

In an embodiment, the articulated arm comprises a third segment. The third segment is connected to the second segment. The third segment is movable relative to the second segment. The third segment is configured to rotate relative to the second segment about an axis which is parallel to the axis of rotation of the clamping chuck. In the embodiment, where the articulated arm comprises a third segment, the second end of the articulated arm is defined by an end of the third segment.

The presence of a plurality of segments allows freedom of manoeuvre and better positioning compared to a solution where the arm is made as a single part. More specifically, the higher the number of segments the higher the manoeuvrability of the articulated arm.

In an embodiment, the supporting arm has a first end and a second end. The first tool and/or the second tool are connected to the supporting rod at respective working positions. The working position of the first and/or the second tool is adjustable between the first end and the second end along the supporting rod.

In an embodiment, at least one between the first and the second tool is rotatable about an axis parallel to the vertical direction. Preferably, the first tool and the second tool are rotatable about an axis parallel to the vertical direction.

In an embodiment, the first tool and/or the second tool are symmetrical about an axis parallel to the vertical direction. In an embodiment, the first tool and/or the second tool comprise an abutment surface configured to come into contact with the tyre. In an embodiment, the abutment surface faces towards the clamping chuck. In an embodiment, the abutment surface is a flat surface.

In an embodiment, the first and/or the second tool have a contact end. The contact end may be wedge shaped to come into contact with the edge of the rim and the tyre of the wheel.

In one embodiment, the contact end of the first tool and the contact end of the second tool are at the same height from the floor. In other embodiments, the contact ends may be located at different heights from the floor, for example by varying the angle made between the supporting rod and the vertical direction.

In an embodiment, the first and/or the second tool are removable from the supporting rod. This makes the machine modular, which means less maintenance costs (limited tool changes) and more flexibility (use of different types of tools).

In an embodiment, the first and/or the second tool are connected to the supporting rod through a shock absorbing system. The shock absorbing system is configured to reduce the shock and the resulting noise produced by the backlash of the tyre under pressure. The shock absorbing system comprises at least one elastic element, interposed between the supporting rod and the respective first or second tool.

According to one aspect of it, this invention also provides a method for moving a vehicle wheel tyre relative to a corresponding wheel rim.

According to one aspect of it, this invention also provides a method for mounting a vehicle wheel tyre relative to a corresponding wheel rim.

In an embodiment, the method comprises a step of providing a frame which includes a base and a column extending along a vertical direction.

In an embodiment, the method comprises a step of locking the rim by means of a clamping chuck associated with the base of the frame.

In one embodiment, the method comprises a step of rotating the clamping chuck about a respective axis of rotation parallel to the vertical direction. In other embodiments of the method, the axis of rotation of the chuck may be horizontal (perpendicular to the vertical direction) or inclined at an angle to the vertical direction.

In an embodiment, the method comprises a step of activating a working unit, which includes a first and a second working tool, to apply a pressure on a sidewall of the tyre at a first and a second point of the sidewall of the tyre which are mutually spaced apart. The step of activating a working unit comprises a step of moving an articulated arm extending from a first end, which is hinged to the column of the frame, to a second end, which is connected to the working unit.

In an embodiment, the method comprises a step of interposing a further tool between a flange of the rim and the bead of the tyre. The method comprises a step of rotating the chuck in order to move the tyre relative to the rim.

In an embodiment, the step of activating the working unit includes moving the first and the second working tool. In an embodiment, the step of activating the working unit includes moving the first and the second working tool relative to the articulated arm along the vertical direction. This movement allows varying the distance between the working unit and the second end of the articulated arm along the vertical direction.

In an embodiment, the method comprises a step of supporting, where a supporting rod, which extends from a first end to a second end along the vertical direction, supports the first and the second working tool. In the step of supporting, the first working tool and the second working tool are held apart.

In an embodiment, where a spacing bar is connected to the actuator and to the supporting rod at a connecting position, the method comprises a step of rotating the supporting rod. In the step of rotating the supporting rod, the rod rotates about a first axis of rotation. The first axis of rotation is parallel to the vertical direction and passes through the connecting position.

In an embodiment, the method comprises a step of adjusting. In the step of adjusting, the connecting position varies between the first end and the second end along the supporting rod.

In an embodiment, the method comprises a step of manoeuvring. In the step of manoeuvring, a manoeuvring element located at the working unit is handled in order to allow the articulated arm and/or the working unit to be moved.

In an embodiment, the method comprises a step of controlling. In the step of controlling, the control unit drives the actuator. In an embodiment, the control unit receives drive signals from a user interface. In an embodiment, the control unit processes the drive signals and generates corresponding control signals. In an embodiment, the control unit sends the control signals to the actuator.

In an embodiment, where the articulated arm comprises a first segment hinged to the column of the frame and a second segment connected to the first segment and to the working unit, the step of adjusting the articulated arm comprises a second step of rotating. In the second step of rotating, the first segment rotates relative to the second segment at a respective hinge.

In an embodiment, the method comprises a step of rotating in which the wheel is set in rotation by the clamping chuck which rotates about the axis of rotation. In this step of rotating, the first tool and/or the second tool are in contact with a sidewall of the tyre.

In an embodiment, the step of rotating comprises a step of entraining. In the step of entraining, the first tool and/or the second tool are entrained in rotation by the wheel. In the step of entraining, the articulated arm rotates about the hinge to allow entraining the first and/or the second tool. In an embodiment, in the step of entraining, the first segment and/or the second segment and/or the third segment rotate relative to each other to allow entraining the first tool and/or the second tool.

In an embodiment, the method comprises a step of substituting. In the step of substituting, the first tool and/or the second tool are substituted with other tools.

These and other features will become more apparent from the following detailed description of a preferred, non-limiting embodiment, illustrated by way of example in the accompanying drawings, in which:

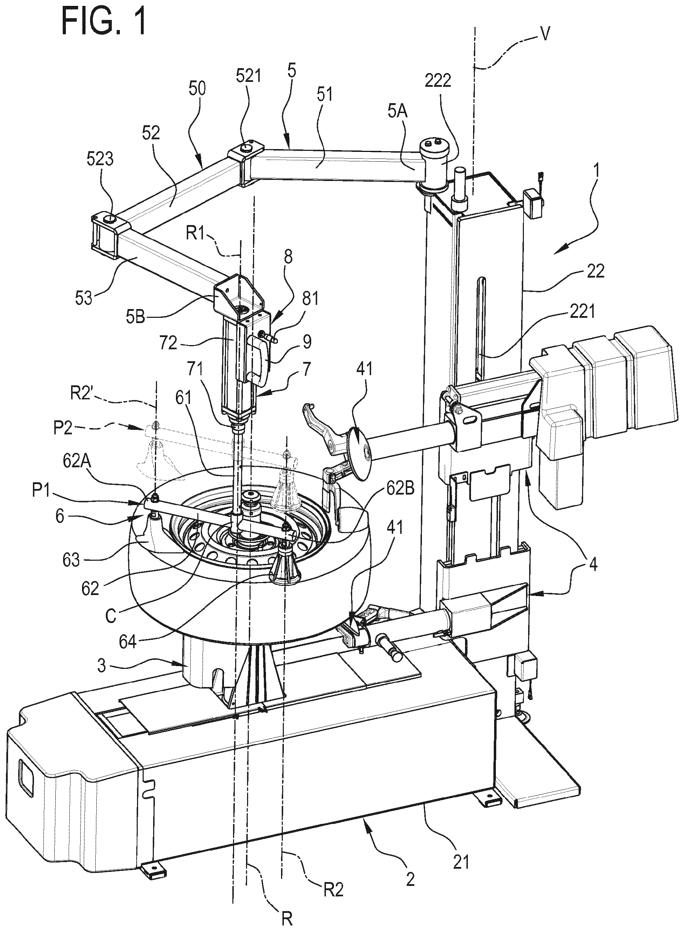

- Figure 1 is a schematic perspective view of a tyre changing apparatus;

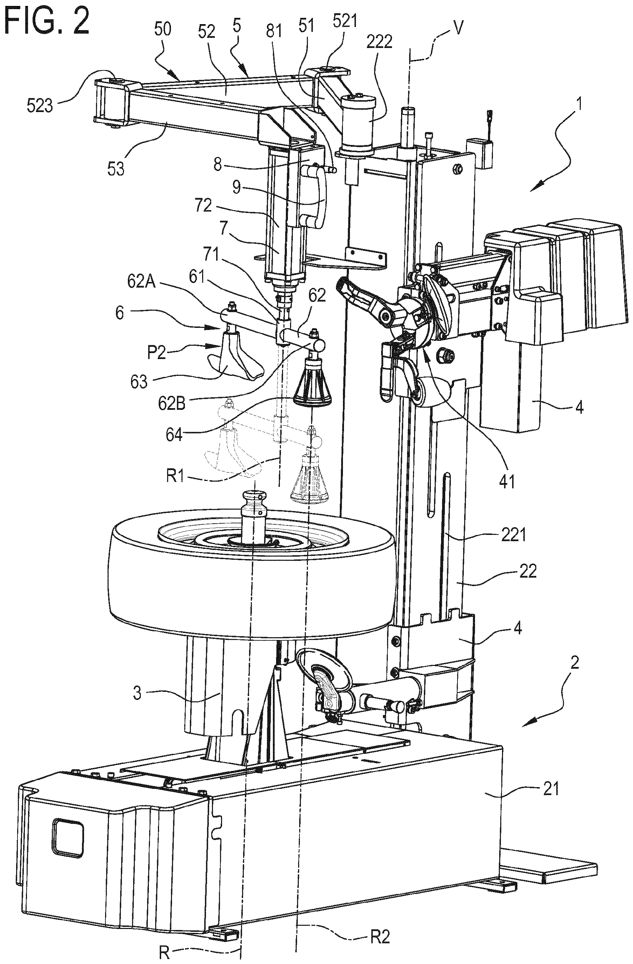

- Figure 2 is a further perspective view of the tyre changing apparatus of Figure 1;

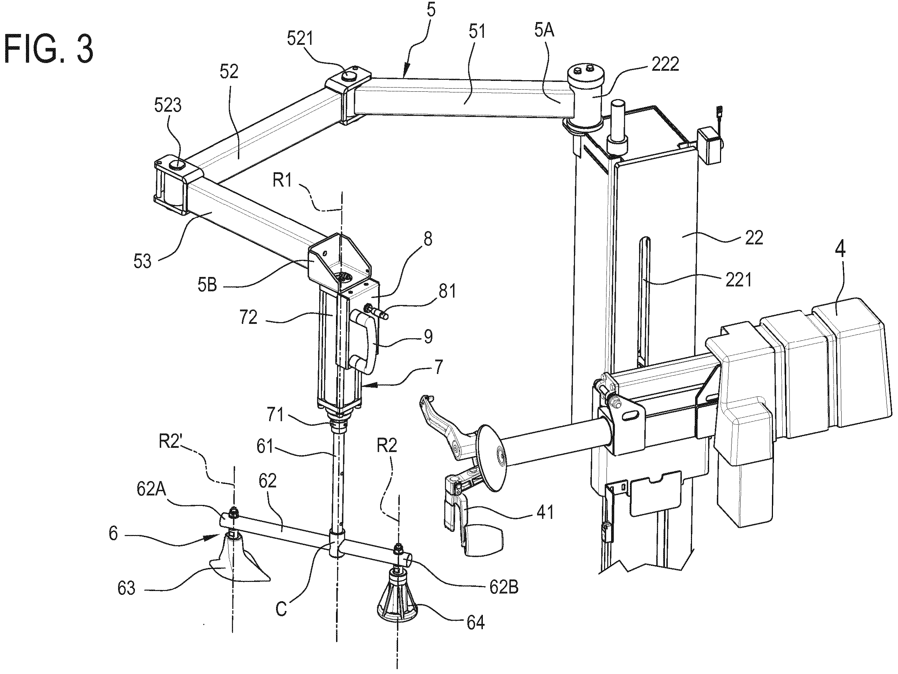

- Figure 3 shows a detail of an articulated arm and a working unit of the apparatus of Figure 1;

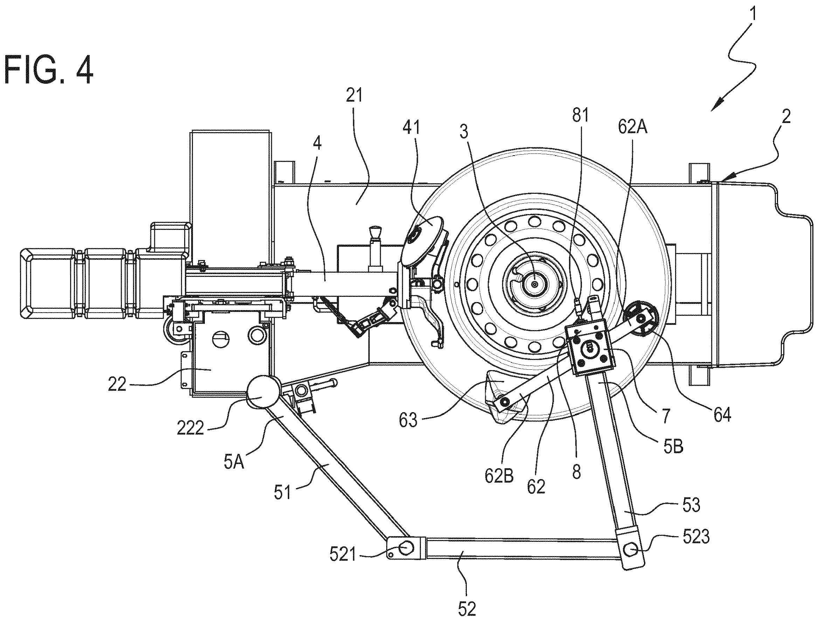

- Figure 4 is a top view of the apparatus of Figure 1.

With reference to the accompanying drawings, the numeral 1 denotes a tyre changing apparatus. The apparatus 1 is configured to mount and/or demount a tyre on and/or from a respective vehicle wheel rim. The apparatus 1 comprises a frame 2 configured to support the other components of the apparatus 1 on the floor. The frame 2 comprises a base 21. The frame 2 comprises a column 22. The base 21 rests on the floor. The column 22 is connected to the base 21 and extends along a vertical direction V parallel to the direction of the weight force. The apparatus 1 comprises a clamping chuck 3. The clamping chuck 3 is configured to grip and hold the wheel rim demounting/mounting operations of the tyre from/on the rim.

The clamping chuck 3 is connected to the base 21 of the frame 2. The clamping chuck 3 is configured to rotate about an axis of rotation R and to impart rotation also to the rim. In a preferred embodiment, the axis of rotation R is parallel to the vertical direction V. In an embodiment, the axis of rotation R is perpendicular to the vertical direction V. In an embodiment, the axis of rotation R is inclined at an angle to the vertical direction V. In an embodiment, the column 22 comprises at least one slideway 221. In an embodiment, the apparatus comprises one or more operating carriages 4. The one or more operating carriages are coupled to the column 22. The slideway 221 is configured to allow the one or more operating carriages 4 to slide vertically. Each of the one or more operating carriages 4 includes a respective operating tool 41. In an embodiment, each of the one or more operating carriages 4 includes a respective tool assembly 41.

In an embodiment, the operating tool 41 is configured to mount the tyre on the rim. In an embodiment, the operating tool is configured to demount the tyre from the rim.

In an embodiment, the column 22 comprises a first hinge 222.

In an embodiment, the apparatus 1 comprises an articulated arm 5. The articulated arm 5 is connected to the column 22 at the first hinge 222.

In a preferred embodiment, the first hinge 222 is fixed relative to the column 22 along the vertical direction V. In other embodiments, the first hinge 222 can move relative to the column 22 along the vertical direction V. The first hinge 222 is configured to allow the articulated arm 5 to rotate relative to the column 22 about an axis parallel to the vertical direction V. In other embodiments, the first hinge 222 is also configured to allow the articulated arm 5 to rotate about an axis perpendicular to the vertical direction V.

The articulated arm 5 extends from a first end 5A to a second end 5B. The articulated arm 5 is connected to the column 22 at its first end 5A.

In an embodiment, the articulated arm 5 comprises a plurality of segments 50. In an embodiment, the articulated arm 5 comprises a first segment 51. In an embodiment, the articulated arm 5 comprises a second segment 52. In an embodiment, the articulated arm 5 comprises a third segment 53. The first segment 51 is connected to the column 22 of the frame 2. In one embodiment, the first segment 51 is connected to the column 22 at the first hinge 222 to be rotated about the latter. In other embodiments, the first segment 51 is configured to be translated relative to the column 22. The second segment 52 is connected to the first segment 51 and to the third segment 53. In an embodiment, the second segment 52 is connected to the first segment 51 at a respective second hinge 521 to be rotated relative to each other. In an embodiment, the second segment 52 is connected to the third segment 53 at a respective third hinge 523 to be rotated relative to each other.

In an embodiment, the first segment 51, the second segment 52 and the third segment 53 are elongate in a direction perpendicular to the vertical direction V. In an embodiment, the first segment 51, the second segment 52 and the third segment 53 have a square, polygonal or circular cross section.

In an embodiment, the apparatus 1 comprises a working unit 6. The working unit 6 is configured to carry out at least some of the operations for mounting and demounting the tyre relative to the rim. More specifically, the working unit 6 is particularly functional for mounting operations. In effect, in mounting operations, the working unit prevents the part of the tyre bead already mounted on the rim from coming off as the mounting tool moves away along the rim. Further, the working unit 6 allows considerably reducing the mechanical stress on the wheel: keeping the tyre's bottom bead in its respective groove in the rim provides extra clearance for the top bead, which can thus be mounted with less effort. The working unit is movable between an enabled position P1, where it is at least partly in contact with the tyre of the wheel, and a disabled position P2, where it is vertically and/or horizontally clear of the tyre of the wheel (that is, it is not in contact with the tyre).

By moving the articulated arm, the working unit can also adopt a position where it is away from the axis of the wheel-holder unit, so as not to interfere with operations where the tyre mechanic does not need the wheel-holder unit.

In an embodiment, the articulated arm 5 is movable between an interference position, where the working unit is at the enabled position P1, and a non-interference position, where the articulated arm 5 is retracted towards the column 22 so as not to interfere with other operations on the wheel.

In an embodiment, the working unit 6 includes a spacing bar 61. In an embodiment, the working unit 6 includes a supporting rod 62. In an embodiment, the working unit comprises a first tool 63. In an embodiment, the working unit comprises a second tool 64.

The working unit 6 is connected to the articulated arm 5 at its second end 5B. In an embodiment, the spacing bar 61 of the working unit 6 is connected to the articulated arm 5 at its second end 5B. The spacing bar 61 extends along the vertical direction V. The spacing bar 61 is connected to the supporting rod 62 at a connecting position C.

The supporting rod 62 extends along a direction transversal (e.g. perpendicular) to the vertical direction V from a first end 62A to a second end 62B.

In an embodiment, the connecting position C is variable (that is, adjustable) along the supporting rod 62 between the first end 62A and the second end 62B. thereof.

The supporting rod 62 and the spacing bar 61 may have a polygonal or circular cross section.

The first tool 63 and/or the second tool 64 are configured to perform operations on the tyre such as, by way of non-limiting example, applying pressure on the tyre bead.

In an embodiment, the first tool 63 is connected to the first end 62A of the supporting rod 62. In an embodiment, the second tool 64 is connected to the second end 62B of the supporting rod 62.

In an embodiment, the first tool 63 and/or the second tool 64 are removable from the supporting rod 62. In particular, in one embodiment, a connector is configured to lock the respective tool 63, 64 to the corresponding end 62A, 62B of the supporting rod 62.

In an embodiment, the spacing bar 61 is configured to rotate relative to the articulated arm 5 about a first adjustment axis R1, parallel to the vertical direction V. In an embodiment, the spacing bar 61 is configured to rotate relative to the articulated arm 5 about an axis whose inclination to the vertical direction V is variable.

In an embodiment, the supporting rod 62 is configured to rotate relative to the spacing bar 61 about the first adjustment axis R1 to vary its angular position in a plane perpendicular to the first adjustment axis R1. In an embodiment, the supporting rod 62 is configured to rotate relative to the spacing bar 61 about an axis whose inclination to the vertical direction V is variable.

In an embodiment, the first tool 63 is configured to rotate about a respective axis of oscillation R2. In an embodiment, the second tool 64 is configured to rotate about a respective axis of oscillation R2'. The axes of oscillation R2 and R2' of the first tool 63 and of the second tool 64 are each parallel to the first adjustment axis R1. In an embodiment, the first and/or the second tool 63, 64 are configured to rotate about an axis whose inclination to the vertical direction V is variable.

In an embodiment, the apparatus comprises an actuator 7. The actuator 7 is configured to move the working unit 6 vertically relative to the clamping chuck 3. In an embodiment, the actuator 7 is configured to move the working unit 6 vertically relative to the articulated arm 5 (that is, relative to the second end 5B of the articulated arm 5). In an embodiment, the actuator 7 is a pneumatic actuator. The actuator 7 might also be a hydraulic actuator or an electric actuator.

In an embodiment, the actuator 7 comprises a piston 71 and a cylinder 72. The piston 71 is configured to slide vertically inside the cylinder 72, thereby varying the distance between the second end 5B of the articulated arm 5 and the working unit.

In one embodiment, the spacing bar 61 corresponds to the piston 71. In other embodiments, the piston 71 is connected to the spacing bar 61. In an embodiment, the piston 71 is rotatable about the first adjustment axis R1.

In an embodiment, the supporting rod 62 is pivoted to the spacing bar 61 at the connecting position C.

The cylinder 72 is connected to the articulated arm 5 (that is, to the second end 5B of the articulated arm 5).

In an embodiment, the apparatus 1 comprises a control unit 8. The control unit 8 comprises a user interface 81.

The control unit 8 is configured to receive drive signals from the user interface 81. The control unit 8 is configured to process the drive signals and to generate corresponding control signals. The control unit 8 is configured to send the control signals to the actuator 7 to instruct the working unit 6 to move.

In an embodiment, the control unit 8 and the user interface 81 are located at the working unit 6 or at the actuator 7 or at the second end 5B of the articulated arm 5.

The apparatus 1 comprises a manoeuvring element 9. The manoeuvring element is located at the working unit 6 or at the actuator 7 or at the control unit 8 or at the second end 5B of the articulated arm 5. The manoeuvring element is, by way of non-limiting example, a handle 9. The manoeuvring element makes it easier to move the articulated arm because it is located at the far end of the articulated arm 5 relative to the hinge 222. Much less effort is therefore required to manoeuvre the articulated arm 5. In an embodiment, the first tool 63 and/or the second tool 64 include a contact surface configured to come into contact with a shoulder of the tyre. In an embodiment, the first tool 63 and/or the second tool 64 have a contact end. The contact end may be wedge shaped to come between the edge of the rim and the tyre of the wheel.

In one embodiment, the contact end of the first tool 63 and the contact end of the second tool 64 are at the same height from the floor. In other embodiments, the contact ends may be located at different heights from the floor, for example by varying the angle made between the supporting rod 62 and the vertical direction V.

In an embodiment, the apparatus 1 comprises a rotating actuator configured to set the clamping chuck 3 in rotation. The rotating actuator 3 is connected to a controller or a drive element to receive from it control signals which represent operating parameters of the rotating actuator (for example, rotation speed, drive torque).

According to one aspect of this invention, it is provided a method for moving (mounting, demounting) a vehicle wheel tyre relative to a corresponding wheel rim.

The method comprises a step of providing a tyre changing apparatus 1 including one or more of the following features:
- a frame 2, including a column 22 and a base 21;
- a clamping chuck 3,
- one or more operating carriages;
- an articulated arm 5;
- a working unit 6;
- an actuator 7;
- a control unit 8.

In an embodiment, the method comprises a step of mounting the wheel rim on the clamping chuck 3. In this step, the rim is locked to the chuck to allow the tyre to be demounted from the wheel. In an embodiment, the method comprises a step of demounting the wheel rim from the clamping chuck 3. In this step, the rim is released from the chuck because wheel service operations are over.

In an embodiment, the method comprises a step of rotating the wheel. In the step of setting in rotation, the clamping chuck 3 rotates and entrains the wheel rim with it.

In an embodiment, the method comprises a step of activating one or more operating carriages 4, each including a respective operating tool 41. In the step of activating, one or more operating carriages 4, mounted on the column 22 of the frame 2, are moved along a slideway 221 until the respective operating tool 41 comes into contact with the wheel.

In an embodiment where the operating tool is a mounting tool, the step of activating comprises a step of mounting in which the tyre is mounted on the respective rim.

In an embodiment where the operating tool is a demounting tool, the step of activating comprises a step of demounting in which the tyre is demounted from the respective rim.

In an embodiment, the method comprises a step of positioning the articulated arm 5. In the step of positioning the articulated arm 5, the articulated arm 5 is moved from a non-interference position, where the articulated arm 5 is not aligned with the wheel along a vertical direction V, parallel to the direction of the weight force, to a position of interference, where the articulated arm 5 is close to the axis of the chuck.

The step of positioning the articulated arm 5 may be carried out manually or using a further dedicated actuator. In an embodiment, the step of positioning the articulated arm 5 is carried out manually using a manoeuvring element 9, located at the control unit and/or at a second end 5B of the articulated arm 5.

The step of positioning the articulated arm comprises a first step of rotating. In the first step of rotating, the articulated arm 5 rotates relative to the column 22 about a first hinge 222.

In an embodiment, where the articulated arm 5 comprises a first segment 51 and a second segment 52, the method comprises a second step of rotating. In the second step of rotating, the second segment 52 rotates relative to the first segment 51 about a second hinge 521.

In an embodiment, where the articulated arm 5 also comprises a third segment 53, the method comprises a third step of rotating. In the third step of rotating, the third segment 53 rotates relative to the second segment 52 about a third hinge 523.

In an embodiment, the step of moving the articulated arm 5 may comprise a step of translating the second segment 52 relative to the first segment 51, the two segments being coupled to each other by a prismatic pair.

In an embodiment, the method comprises a step of activating the working unit 6.

In the step of activating the working unit 6, the working unit 6 is moved so as to vary the distance between the working unit 6 and the clamping chuck 3 along the vertical direction V. In the step of activating the working unit 6, the working unit 6 is moved between a disabled position P2, where a first tool 63 and/or a second tool 64 are clear of the tyre, and an enabled position P1, where the first tool 63 and/or the second tool 64 are in contact with the tyre.

In an embodiment, the method comprises a step of moving the working unit 6 vertically. In this step, the working unit moves vertically relative to the articulated arm 5, which remains stationary relative to the column 22. In an embodiment, the step of moving the working unit 6 is carried out by means of an actuator 7 which is interposed between the articulated arm 5 and the working unit 6.

In an embodiment, the step of moving comprises a step of sliding a piston 71 of the actuator 7 inside a cylinder 72 of the actuator 7. In this embodiment, the piston 71, since it is connected to the spacing bar 61 of the working unit 6, entrains the working unit 6 and thereby causes it to move vertically accordingly.

In an embodiment, the step of activating the working unit 6 comprises a step of rotating the working unit 6. In an embodiment, in the step of rotating the working unit 6, the working unit 6 (that is, a spacing bar 61 of the working unit connected to the articulated arm 5) rotates about a first adjustment axis R1. In an embodiment, in the step of rotating the working unit 6, a supporting rod of the working unit 6 rotates about the first adjustment axis R1 to vary its angular position in a horizontal plane, perpendicular to the vertical direction V.

In an embodiment, in the step of rotating the working unit 6, a first tool 63 and/or a second tool 64 rotate about a respective axis of oscillation R2, R2'.

In an embodiment, the method comprises a step of executing, in which, with the working unit 6 at the enabled position P1 the first tool 63 and/or the second tool 64 contribute to performing a step of mounting the tyre to the respective wheel. More specifically, in the step of executing, while the operating tool 41 performs the step of mounting, the first working tool 63 and/or the second working tool 64 press the sidewall of the tyre.

The method comprises a step of controlling the apparatus 1. In the step of controlling the apparatus 1, the control unit 8 receives drive signals (input data, configuration signals) from a user interface 81. In the step of controlling the apparatus 1, the control unit 8 processes the drive signals and generates corresponding control signals which represent operating parameters of the actuator 7 (for example, fluid pressure in a cylinder 72). In the step of controlling the apparatus 1, the control unit sends the control signals to the actuator 7, which moves the working unit 6 and/or the articulated arm 5 accordingly.

In an embodiment, the method comprises a step of mounting. In the step of mounting, the operating tool 41 is a mounting tool that mounts the tyre on the respective rim. In the step of mounting, the first working tool 63 and/or the second working tool 64 press the sidewall of the tyre, while the mounting tool proceeds with mounting operations all the way round the tyre.

In an embodiment, the method comprises a step of rotating in which the wheel is set in rotation by the clamping chuck 3 which rotates about the axis of rotation R. In this step of rotating, the first tool 63 and/or the second tool 64 remain in contact with the sidewall of the tyre.

In an embodiment, the step of rotating comprises a step of entraining. In the step of entraining, the first tool 63 and/or the second tool 64 are entrained in rotation by the wheel. In the step of entraining, the articulated arm 5 rotates about the hinge 222 to allow entraining the first tool 63 and/or the second tool 64. In an embodiment, in the step of entraining, the first segment 51 and/or the second segment 52 and/or the third segment 53 rotate relative to each other to allow entraining the first tool 63 and/or the second tool 64.

In an embodiment, the method comprises a step of substituting. In the step of substituting, the first tool 63 and/or the second tool 64 are substituted with other tools. Substitution may be carried, for example, to substitute the first tool 63 and/or the second tool 64 with other tools having the same function but relating to different embodiments.

In an embodiment, the method comprises a step of supporting, in which, during mounting/demounting operations, the supporting rod supports the first tool 63 at a corresponding first end 62A of the supporting rod 62, and/or the second tool 64 at a corresponding second end 62B of the supporting rod 62

In an embodiment, the method comprises a step of adjusting. The step of adjusting comprises a first step of adjusting. In an embodiment in which the spacing bar 61 is connected to the supporting rod 62 at a connecting point C, the first step of adjusting comprises a step of moving the connecting point C between a first end 62A and a second end 62B of the supporting rod 62.

In an embodiment, the method comprises a step of positioning the working unit 6.

The step of positioning comprises a step of tool positioning. In the step of tool positioning, the first tool 63 is positioned in contact with the tyre. In the step of tool positioning, the second tool 64 is positioned in contact with the tyre by rotating the supporting rod 62. In the step of positioning, rotation of the supporting rod 62 may be accomplished by the effect of rotating the clamping chuck 3 which, by entraining the first tool 63, causes the supporting rod 62 to rotate and thereby moves the second tool 64 accordingly.

The step of positioning comprises a step of vertically adjusting, in which the first tool 63 and the second tool 64 are moved vertically in the direction of the sidewall of the tyre. In the step of tool positioning, the articulated arm 5 rotates about the hinge 222.

The step of adjusting comprises a second step of adjusting. In the second step of adjusting, the first tool 63 varies its position between the first end 62A and the second end 62B along the supporting rod. In the second step of adjusting, the second tool 64 varies its position between the first end 62A and the second end 62B along the supporting rod.

It should be noted that this invention refers, by way of non-limiting example, to a machine whose chuck is oriented vertically; it is understood, however, that with the necessary changes made, the invention also applies to solutions where the chuck is oriented differently: for example, rotating about a horizontal axis or an inclined axis (whatever the case, the working axis is the axis parallel to the axis of the chuck).

## Claims

1. A tyre changing apparatus (1) for mounting/demounting a tyre on/from a respective vehicle wheel rim, comprising:
- a frame (2), including a base (21) and a column (22), extending along a vertical direction (V);
- a chuck (3) for clamping the rim, associated with the base (21) and rotatable about an axis of rotation (R) parallel to the vertical direction (V);
- a working unit (6) including a first working tool (63) and a second working tool (64);
- an articulated arm (5) extending from a first end (5A), which is hinged to the column (22) of the frame (2), to a second end (5B), which is connected to the working unit (6);
- an actuator (7) for varying the distance between the working unit (6) and the clamping chuck (3),
the apparatus (1) being **characterized in that** the working unit (6) comprises a supporting rod (62) oriented perpendicularly to the vertical direction (V), the first working tool (63) and the second working tool (64) being connected to the supporting rod (62), and being spaced from each other, and **in that** the actuator (7) is interposed between the second end (5B) of the articulated arm (5) and the supporting rod (62) to vary the distance between the working unit (6) and the second end (5B) of the articulated arm (5) along the vertical direction (V).

2. The apparatus (1) according to claim 1, wherein the articulated arm (5) is hinged to the column (22) of the frame (2) at a connecting position which is fixed along the vertical direction (V).

3. The apparatus (1) according to claim 1 or 2, wherein the working unit (6) comprises a spacing bar (61), parallel to the vertical direction (V) and extending from a first end, which is connected to the actuator (7), to a second end, which is connected to the supporting rod (62) at a connecting position (C).

4. The apparatus (1) according to claim 3, wherein the spacing bar (61) is hinged to the supporting rod (62) to rotate about a first adjustment axis (R1), parallel to the vertical direction (V) and passing through the connecting position (C).

5. The apparatus (1) according to any one of the preceding claims, wherein the actuator includes a cylinder (72), connected to the articulated arm (5), and a piston (71), slidable inside the cylinder (72) along the vertical direction (V) and connected to the supporting rod (62) of the working unit (6) at a connecting position (C).

6. The apparatus (1) according to any one of the preceding claims, comprising a control unit (8), configured to drive the actuator (7) and positioned on the working unit (6) or on the second end (5B) of the articulated arm (5).

7. The apparatus (1) according to claim 6, comprising a manoeuvring element (9), positioned on the control unit (8) and configured to make it easier to move the articulated arm (5) manually.

8. The apparatus (1) according to any one of the preceding claims, wherein the articulated arm (5) comprises a first segment (51), hinged to the column (22) of the frame (2), and a second segment (52), connected to the first segment (51) and movable relative to the first segment (51) to vary the distance of the second end (5B) of the articulated arm (5) from the column (22) of the frame (2), wherein the first segment (51) is hinged to the second segment (52) to rotate relative to it about an adjustment axis that is parallel to the vertical direction (V).

9. The apparatus (1) according to any one of the preceding claims, wherein the supporting rod (62) has a first end (62A) and a second end (62B) and wherein the first working tool (63) and the second working tool (64) are connected to the supporting rod (62) at respective working positions which are adjustable between the first end (62A) and the second end (62B) along the supporting rod (62).

10. The apparatus (1) according to any one of the preceding claims, wherein the first working tool (63) and the second working (64) include a contact surface that is configured to come into contact with the tyre, and are configured to rotate relative to the supporting rod (62) about a respective axis of oscillation (R2, R2').

11. The apparatus (1) according to any one of the preceding claims, wherein the first working tool (63) and the second working tool (64) are removable from the supporting rod (62) and replaceable.

12. A method for moving a vehicle wheel tyre relative to a corresponding wheel rim, comprising the following steps:
- providing a frame (2), including a base (21) and a column (22), extending along a vertical direction (V);
- locking the rim by means of a clamping chuck (3) associated with the base (21) of the frame (2);
- rotating the clamping chuck (3) about a respective axis of rotation (R) parallel to the vertical direction (V);
- activating a working unit (6), which includes a first working tool (63) and a second working tool (64), to move an articulated arm (5) extending from a first end (5A), which is hinged to the column (22) of the frame (2), to a second end (5B), which is connected to the working unit (6) in order to apply pressure on a sidewall of the tyre at a first and a second point of the sidewall of the tyre which are mutually spaced apart;
- interposing a further tool (41) between a flange of the rim and the bead of the tyre and rotating the clamping chuck (3) in order to move the tyre relative to the rim,
the method being **characterized in that** the step of activating the working unit (6) includes moving the first working tool (63) and the second working tool (64) relative to the articulated arm (5) along the vertical direction (V) to vary the distance between the working unit (6) and the second end (5B) of the articulated arm (5) along the vertical direction (V), wherein a supporting rod (62), which extends from a first end (62A) to a second end (62B) along a direction transversal to the vertical direction (V), supports the first working tool (63) and the second working tool (64) while holding them apart.

13. The method according to claim 12, wherein a spacing bar (61) is connected to the actuator (7) and to the supporting rod (62) at a connecting position (C), the method comprising a step of rotating the supporting rod (62) about a first axis of rotation (R1), parallel to the vertical direction (V) and passing through the connecting position (C).

14. The method according to claim 13, comprising a step of adjusting in which the connecting position (C) varies between the first end (62A) and the second end (62B) along the supporting rod (62).

## Patentansprüche

1. Reifenwechselgerät (1) zum Demontieren/Montieren eines Reifens von/an einer jeweiligen Fahrzeugradfelge, umfassend:
- einen Rahmen (2), einschließend eine Basis (21) und eine Säule (22), sich erstreckend entlang einer vertikalen Richtung (V);
- ein Spannfutter (3) zum Festspannen der Felge, das mit der Basis (21) assoziiert und um eine Rotationsachse (R) drehbar ist, die parallel zur vertikalen Richtung (V) angeordnet ist;
- eine Arbeitseinheit (6), die ein erstes Arbeitswerkzeug (63) und ein zweites Arbeitswerkzeug (64) einschließt;
- einen Gelenkarm (5), der sich von einem ersten Ende (5A), das gelenkig an der Säule (22) des Rahmens (2) angebracht ist, zu einem zweiten Ende (5B) erstreckt, das mit der Arbeitseinheit (6) verbunden ist;
- einen Steller (7) zum Variieren des Abstands zwischen der Arbeitseinheit (6) und dem Spannfutter (3),
wobei das Gerät (1) **dadurch gekennzeichnet ist, dass** die Arbeitseinheit (6) eine Stützstange (62) umfasst, die rechtwinkelig zur vertikalen Richtung (V) ausgerichtet ist, wobei das erste Arbeitswerkzeug (63) und das zweite Arbeitswerkzeug (64) mit der Stützstange (62) verbunden und voneinander beabstandet sind, und dadurch, dass der Steller (7) zwischen dem zweiten Ende (5B) des Gelenkarms (5) und der Stützstange (62) eingesetzt ist, um den Abstand zwischen der Arbeitseinheit (6) und dem zweiten Ende (5B) des Gelenkarms (5) entlang der vertikalen Richtung (V) zu variieren.

2. Gerät (1) nach Anspruch 1, wobei der Gelenkarm (5) gelenkig an der Säule (22) des Rahmens (2) an einer Verbindungsposition angebracht ist, die entlang der vertikalen Richtung (V) fixiert ist.

3. Gerät (1) nach Anspruch 1 oder 2, wobei die Arbeitseinheit (6) einen Beabstandungsstab (61) umfasst, der parallel zur vertikalen Richtung (V) angeordnet ist und sich von einem ersten Ende, das mit dem Steller (7) verbunden ist, zu einem zweiten Ende, das mit der Stützstange (62) an einer Verbindungsposition (C) verbunden ist, erstreckt.

4. Gerät (1) nach Anspruch 3, wobei der Beabstandungsstab (61) gelenkig an der Stützstange (62) angebracht ist, um sich um eine erste Einstellachse (R1) zu drehen, die parallel zur vertikalen Richtung (V) angeordnet ist und durch die Verbindungsposition (C) führt.

5. Gerät (1) nach einem der vorhergehenden Ansprüche, wobei der Steller einen Zylinder (72) einschließt, der mit dem Gelenkarm (5) verbunden ist, und einen Kolben (71), der im Zylinder (72) entlang der vertikalen Richtung (V) verschiebbar und mit der Stützstange (62) der Arbeitseinheit (6) an einer Verbindungsposition (C) verbunden ist.

6. Gerät (1) nach einem der vorhergehenden Ansprüche, umfassend eine Steuereinheit (8), die ausgelegt ist, um den Steller (7) zu steuern und die auf der Arbeitseinheit (6) oder dem zweiten Ende (5) des Gelenkarms (5) positioniert ist.

7. Gerät (1) nach Anspruch 6, umfassend ein Manövrierelement (9), das auf der Steuereinheit (8) positioniert und ausgelegt ist, um das manuelle Bewegen des Gelenkarms (5) zu vereinfachen.

8. Gerät (1) nach einem der vorhergehenden Ansprüche, wobei der Gelenkarm (5) ein erstes Segment (51) umfasst, das gelenkig an der Säule (22) des Rahmens (2) angebracht ist, und ein zweites Segment (52), das mit dem ersten Segment (51) verbunden und relativ zum ersten Segment (51) bewegbar ist, um den Abstand des zweiten Endes (5B) des Gelenkarms (5) von der Säule (22) des Rahmens (2) zu variieren, wobei das erste Segment (51) gelenkig am zweiten Segment (52) angebracht ist, um sich relativ zu diesem um eine Einstellachse zu bewegen, die parallel zur vertikalen Richtung (V) angeordnet ist.

9. Gerät (1) nach einem der vorhergehenden Ansprüche, wobei die Stützstange (62) ein erstes Ende (62A) und ein zweites Ende (62B) aufweist und wobei das erste Arbeitswerkzeug (63) und das zweite Arbeitswerkzeug (64) mit der Stützstange (62) an jeweiligen Arbeitspositionen verbunden sind, die zwischen dem ersten Ende (62A) und dem zweiten Ende (62B) entlang der Stützstange (62) einstellbar sind.

10. Gerät (1) nach einem der vorhergehenden Ansprüche, wobei das erste Arbeitswerkzeug (63) und das zweite Arbeitswerkzeug (64) eine Kontaktoberfläche einschließen, die ausgelegt ist, um mit dem Reifen in Kontakt zu kommen, und ausgelegt sind, um sich relativ zur Stützstange (62) um eine jeweilige Schwenkachse (R2, R2') zu drehen.

11. Gerät (1) nach einem der vorhergehenden Ansprüche, wobei das erste Arbeitswerkzeug (63) und das zweite Arbeitswerkzeug (64) von der Stützstange (62) entfernt und ersetzt werden können.

12. Verfahren zum Bewegen eines Fahrzeugradreifens relativ zu einer entsprechenden Radfelge, umfassend die folgenden Schritte:
- Bereitstellen eines Rahmens (2), einschließend eine Basis (21) und eine Säule (22), sich erstreckend entlang einer vertikalen Richtung (V);
- Festspannen der Felge mittels eines Spannfutters (3), das mit der Basis (21) des Rahmens (2) assoziiert ist;
- Drehen des Spannfutters (3) um eine jeweilige Rotationsachse (R), die parallel zur vertikalen Richtung (V) angeordnet ist;
- Aktivieren einer Arbeitseinheit (6), die ein erstes Arbeitswerkzeug (63) und ein zweites Arbeitswerkzeug (64) einschließt, um einen Gelenkarm (5) zu bewegen, der sich von einem ersten Ende (5A), das gelenkig an der Säule (22) des Rahmens (2) angebracht ist, zu einem zweiten Ende (5B) erstreckt, das mit der Arbeitseinheit (6) verbunden ist, um Druck auf eine Seitenwand des Reifens an einem ersten und einem zweiten Punkt der Seitenwand des Reifens, die voneinander beabstandet sind, auszuüben;
- Einsetzen eines weiteren Werkzeugs (41) zwischen einem Flansch der Felge und dem Wulst des Reifens und Drehen des Spannfutters (3), um den Reifen relativ zur Felge zu bewegen,
wobei das Verfahren **dadurch gekennzeichnet ist, dass** der Schritt zum Aktivieren der Arbeitseinheit (6) das Bewegen des ersten Arbeitswerkzeugs (63) und des zweiten Arbeitswerkzeugs (64) relativ zum Gelenkarm (5) entlang der vertikalen Richtung (V) einschließt, um den Abstand zwischen der Arbeitseinheit (6) und dem zweiten Ende (5B) des Gelenkarms (5) entlang der vertikalen Richtung (V) zu variieren,
wobei eine Stützstange (62), die sich von einem ersten Ende (62A) zu einem zweiten Ende (62B) entlang einer Richtung erstreckt, die quer zur vertikalen Richtung (V) angeordnet ist, das erste Arbeitswerkzeug (63) und das zweite Arbeitswerkzeug (64) trägt, während diese beabstandet gehalten werden.

13. Verfahren nach Anspruch 12, wobei ein Beabstandungsstab (61) mit dem Steller (7) und der Stützstange (62) an einer Verbindungsposition (C) verbunden ist, wobei das Verfahren einen Schritt zum Drehen der Stützstange (62) um eine erste Rotationsachse (R1) umfasst, die parallel zur vertikalen Richtung (V) angeordnet ist und durch die Verbindungsposition (C) führt.

14. Verfahren nach Anspruch 13, umfassend einen Schritt zum Einstellen, bei dem die Verbindungsposition (C) zwischen dem ersten Ende (62A) und dem zweiten Ende (62B) entlang der Stützstange (62) variiert.

## Revendications

1. Appareil de changement de pneumatiques (1) pour monter/démonter un pneumatique sur/depuis une jante de roue de véhicule respective, comprenant :
- un cadre (2), incluant une base (21) et une colonne (22), s'étendant le long d'une direction verticale (V) ;
- un mandrin (3) pour serrer la jante, associé à la base (21) et pouvant tourner autour d'un axe de rotation (R) parallèle à la direction verticale (V) ;
- une unité de travail (6) incluant un premier outil de travail (63) et un deuxième outil de travail (64) ;
- un bras articulé (5) s'étendant d'une première extrémité (5A), qui est articulée sur la colonne (22) du cadre (2), à une deuxième extrémité (5B), qui est reliée à l'unité de travail (6) ;
- un actionneur (7) pour modifier la distance entre l'unité de travail (6) et le mandrin de serrage (3), l'appareil (1) étant **caractérisé en ce que** l'unité de travail (6) comprend une tige de support (62) orientée perpendiculairement à la direction verticale (V), le premier outil de travail (63) et le deuxième outil de travail (64) étant reliés à la tige de support (62), et étant espacés les uns des autres, et **en ce que** l'actionneur (7) est interposé entre la deuxième extrémité (5B) du bras articulé (5) et la tige de support (62) pour modifier la distance entre l'unité de travail (6) et la deuxième extrémité (5B) du bras articulé (5) le long de la direction verticale (V).

2. Appareil (1) selon la revendication 1, dans lequel le bras articulé (5) est articulé à la colonne (22) du cadre (2) à une position de connexion qui est fixe le long de la direction verticale (V).

3. Appareil (1) selon la revendication 1 ou 2, dans lequel l'unité de travail (6) comprend une barre d'espacement (61), parallèle à la direction verticale (V) et s'étendant d'une première extrémité, qui est reliée à l'actionneur (7), à une deuxième extrémité, qui est reliée à la tige de support (62) à une position de connexion (C).

4. Appareil (1) selon la revendication 3, dans lequel la barre d'espacement (61) est articulée sur la tige de support (62) pour tourner autour d'un premier axe de réglage (R1), parallèle à la direction verticale (V) et passant par la position de connexion (C).

5. Appareil (1) selon l'une quelconque des revendications précédentes, dans lequel l'actionneur inclut un cylindre (72), relié au bras articulé (5), et un piston (71), pouvant coulisser à l'intérieur du cylindre (72) le long de la direction verticale (V) et relié à la tige de support (62) de l'unité de travail (6) à une position de connexion (C).

6. Appareil (1) selon l'une quelconque des revendications précédentes, comprenant une unité de commande (8), configurée pour entraîner l'actionneur (7) et positionnée sur l'unité de travail (6) ou sur la deuxième extrémité (5B) du bras articulé (5).

7. Appareil (1) selon la revendication 6, comprenant un élément de manœuvre (9), positionné sur l'unité de commande (8) et configuré pour faciliter le déplacement manuel du bras articulé (5).

8. Appareil (1) selon l'une quelconque des revendications précédentes, dans lequel le bras articulé (5) comprend un premier segment (51), articulé à la colonne (22) du cadre (2), et un deuxième segment (52), relié au premier segment (51) et mobile par rapport au premier segment (51) pour modifier la distance de la deuxième extrémité (5B) du bras articulé (5) par rapport à la colonne (22) du cadre (2), dans lequel le premier segment (51) est articulé sur le deuxième segment (52) pour tourner par rapport à celui-ci autour d'un axe de réglage qui est parallèle à la direction verticale (V).

9. Appareil (1) selon l'une quelconque des revendications précédentes, dans lequel la tige de support (62) présente une première extrémité (62A) et une deuxième extrémité (62B) et dans lequel le premier outil de travail (63) et le deuxième outil de travail (64) sont reliés à la tige de support (62) dans des positions de travail respectives qui sont réglables entre la première extrémité (62A) et la deuxième extrémité (62B) le long de la tige de support (62).

10. Appareil (1) selon l'une quelconque des revendications précédentes, dans lequel le premier outil de travail (63) et le deuxième outil de travail (64) incluent une surface de contact configurée pour entrer en contact avec le pneumatique, et sont configurés pour tourner par rapport à la tige de support (62) autour d'un axe d'oscillation respectif (R2, R2')

11. Appareil (1) selon l'une quelconque des revendications précédentes, dans lequel le premier outil de travail (63) et le deuxième outil de travail (64) sont amovibles de la tige de support (62) et remplaçables.

12. Procédé pour déplacer un pneumatique de roue de véhicule par rapport à une jante de roue correspondante, comprenant les étapes suivantes :
- fournir un cadre (2), incluant une base (21) et une colonne (22), s'étendant le long d'une direction verticale (V) ;
- verrouiller la jante au moyen d'un mandrin de serrage (3) associé à la base (21) du cadre (2) ;
- faire tourner le mandrin de serrage (3) autour d'un axe de rotation respectif (R) parallèle à la direction verticale (V) ;
- activer une unité de travail (6), qui inclut un premier outil de travail (63) et un deuxième outil de travail (64), pour déplacer un bras articulé (5) s'étendant d'une première extrémité (5A), qui est articulée sur la colonne (22) du cadre (2), à une deuxième extrémité (5B), qui est reliée à l'unité de travail (6) de manière à appliquer une pression sur un flanc du pneumatique en un premier et un deuxième point du flanc du pneumatique qui sont mutuellement espacés ;
- interposer un autre outil (41) entre un rebord de la jante et le talon du pneumatique et faire tourner le mandrin de serrage (3) afin de déplacer le pneumatique par rapport à la jante,
le procédé étant **caractérisé en ce que** l'étape d'activer l'unité de travail (6) inclut le déplacement du premier outil de travail (63) et du deuxième outil de travail (64) par rapport au bras articulé (5) le long de la direction verticale (V) pour modifier la distance entre l'unité de travail (6) et la deuxième extrémité (5B) du bras articulé (5) le long de la direction verticale (V), dans lequel une tige de support (62), qui s'étend d'une première extrémité (62A) à une deuxième extrémité (62B) le long d'une direction transversale à la direction verticale (V), supporte le premier outil de travail (63) et le deuxième outil de travail (64) tout en les maintenant séparés.

13. Procédé selon la revendication 12, dans lequel une barre d'espacement (61) est connectée à l'actionneur (7) et à la tige de support (62) au niveau d'une position de connexion (C), le procédé comprenant une étape de rotation de la tige de support (62) autour d'un premier axe de rotation (R1), parallèle à la direction verticale (V) et passant par la position de connexion (C).

14. Procédé selon la revendication 13, comprenant une étape de réglage dans laquelle la position de connexion (C) varie entre la première extrémité (62A) et la deuxième extrémité (62B) le long de la tige de support (62) .
